# DEMANDE DE BREVET EUROPEEN

(11) **EP 1 901 182 A1**
(43) Date de publication de la demande: **19.03.2008**
(21) Numéro de dépôt: 06300956.7
(22) Date de dépôt: 15.09.2006
(51) Int. Cl.: G06F 17/30, H04L 12/24, H04L 12/26

(54) **Dispositif de cartographie de la qualité de service dans un reseau de communication fixe**

(71) Demandeur: Alcatel Lucent, 75008 Paris (FR)
(72) Inventeur: Betge-Brezetz, Stéphane, 75015, Paris (FR); Delegue, Gérard, 94230, Cachan (FR); Gonguet, Arnaud, 75013, Paris (FR); Fournigault, Lionel, 91190, Gif sur Yvette (FR)
(74) Mandataire: Chaffraix, Sylvain

(57) **Abrégé**

Un dispositif (D) est dédié à la cartographie de qualité de service (D) dans un réseau de communication fixe comportant des lignes de communication reliant des équipements de réseau (Ci) à des terminaux de communication (T), via des points d'accès à au moins un service (MD). Ce dispositif (D) comprend i) des moyens de contrôle (MC1) chargés d'ordonner à un équipement de gestion de réseau (EG), couplé aux équipements de réseau (Ci), de déterminer des données d'analyse représentatives d'une qualité de service choisie et/ou d'un état de trafic relatif(s) à au moins un terminal (T) et/ou un équipement de réseau (Ci) situé dans au moins une zone choisie du réseau, ii) des moyens de collection (MC2) chargés de collecter dans l'équipement de gestion de réseau (EG) les données d'analyse déterminées, et iii) des moyens de traitement (MT) chargés de déterminer la position géographique de terminaux (T) et/ou d'équipements de réseau (Ci), situés dans une zone choisie et concernés par des données d'analyse collectées, afin de l'associer à la donnée d'analyse correspondante, et de délivrer sous une forme cartographique les données d'analyse associées aux positions géographiques des équipements de réseau et/ou terminaux situés dans chaque zone choisie, en vue de leur exploitation.

## Description

L'invention concerne les réseaux de communication fixe, en particulier ceux comportant des lignes de transmission de données à haut débit, comme par exemple des lignes de type xDSL (pour « x Digital Subscriber Line ») ou des câbles ou encore des fibres optiques (par exemple de type FTTH (pour « Fiber To The Home »)), et plus précisément le contrôle de la qualité de service dans de tels réseaux.

On entend ici par « lignes de type xDSL » une ligne numérique à paire, symétrique ou asymétrique, utilisant les fréquences inexploitées des lignes téléphoniques des réseaux téléphoniques commutés (ou PSTN), et notamment les connexions ADSL (« Asymetric DSL »), HDSL (« High bit rate DSL »), RDSL (« Rate adaptive DSL »), VDSL (« Very high bit rate DSL ») et SDSL (« Single line DSL »).

L'émergence de services et applications à large bande passante dans les réseaux de communication fixe (du type précité), comme par exemple la vidéoconférence, la télévision numérique, la téléphonie, l'Internet (très) haut débit, rend de plus en plus important le contrôle de la qualité de service (ou QoS). Il est en effet particulièrement important que les opérateurs de ces réseaux disposent d'informations leur permettant de visualiser clairement la qualité de service dans l'intégralité de leur réseau, et notamment la qualité de service effectivement perçue par ses clients (ou abonnés), si possible en fonction de chaque type de service (vidéo, voix, et analogue).

Par ailleurs, les opérateurs doivent fréquemment changer leurs offres commerciales en fonction de l'évolution du marché et des réels besoins de leurs clients, ce qui requiert une bonne connaissance des services qui sont les plus utilisés et la qualité associée dans chaque partie de leurs réseaux fixes. Une telle connaissance permettrait aux opérateurs de mettre en oeuvre des politiques commerciales et publicitaires localisées par exemple dans le but de mieux faire connaître des services peu usités dans certaines parties de leurs réseaux fixes.

Dans les réseaux fixes (à haut débit) actuels les outils de contrôle de la qualité de service ne sont pas suffisamment bien adaptés aux besoins précités des opérateurs. Les outils actuels, comme par exemple Concord ou Infovista, ne permettent en effet que d'afficher des courbes montrant l'évolution de certaines performances au cours du temps, et éventuellement d'effectuer des agrégations de ces performances afin de disposer de moyennes de qualité de service pour un jeu de lignes xDSL ou un concentrateur (ou DSLAM) ou encore un jeu de concentrateurs qui définissent grossièrement une zone géographique au sein d'un réseau.

Ces courbes sont certes nécessaires, mais insuffisantes en particulier dans des réseaux fixes qui ne cessent de se complexifier et de se densifier. Elles ne permettent notamment pas de disposer de l'état global des performances d'un réseau fixe et donc de détecter rapidement et intuitivement des zones posant problème au sein d'une zone géographique, d'une ville ou d'une région, puis d'effectuer des analyses complémentaires, notamment géographiques, de manière à déterminer les causes des problèmes.

Aucune solution connue n'apportant une entière satisfaction, l'invention a donc pour but d'améliorer la situation.

Elle propose à cet effet un dispositif de cartographie de qualité de service pour un réseau de communication fixe comportant des équipements de réseau de positions géographiques déterminables et auxquels sont rattachés, via des points d'accès à au moins un service, des terminaux de communication de positions géographiques déterminables et impliqués dans des trafics définis localement par des données d'analyse représentatives d'une qualité de service et/ou d'un état de trafic.

On entend ici par « point d'accès à au moins un service » un équipement ou un module logiciel permettant la connexion d'au moins un terminal et/ou d'un réseau résidentiel à un réseau large bande d'un opérateur. Il s'agit donc typiquement d'un modem (par exemple ADSL) ou de tout autre équipement/module logiciel d'accès à un service (par exemple une passerelle résidentielle (ou « home gateway »)).

Ce dispositif se caractérise par le fait qu'il comprend :
- des moyens de contrôle chargés d'ordonner à un équipement de gestion de réseau, couplé aux équipements de réseau (eux-mêmes couplés aux points d'accès des terminaux), de déterminer des données d'analyse représentatives d'au moins une qualité de service choisie et/ou d'un état de trafic relatif(s) à au moins un terminal et/ou un équipement de réseau situé dans au moins une zone (géographique ou administrative) choisie du réseau,
- des moyens de collection chargés de collecter dans l'équipement de gestion de réseau les données d'analyse déterminées à la demande des moyens de contrôle, et
- des moyens de traitement chargés de déterminer les positions géographiques de terminaux et/ou d'équipements de réseau qui sont situés dans une zone choisie et sont concernés par des données d'analyse collectées, puis d'associer chaque position déterminée à la donnée d'analyse correspondante, et de délivrer sous une forme cartographique les données d'analyse associées aux positions géographiques de certains au moins des équipements de réseau et/ou terminaux qui sont situés dans chaque zone choisie, en vue de leur exploitation (affichage et/ou analyse).

Le dispositif selon l'invention peut comporter d'autres caractéristiques qui peuvent être prises séparément ou en combinaison, et notamment :
- ses moyens de contrôle peuvent être chargés de programmer, d'une part, l'équipement de gestion de réseau afin qu'il détermine certaines au moins des données d'analyse à des instants choisis et dans des zones choisies, et d'autre part, les moyens de collection afin qu'ils collectent les données d'analyse chaque fois qu'elles ont été déterminées par l'équipement de gestion de réseau ;
- il peut comprendre des moyens d'interface homme/machine permettant à un utilisateur de définir au moins chaque zone choisie de collection de données d'analyse, chaque zone choisie à cartographier, chaque qualité de service choisie, chaque date et/ou heure de détermination de données d'analyse, et chaque terminal et/ou équipement de réseau objet de la cartographie ;
- ses moyens de collection peuvent être chargés de stocker les données d'analyse collectées, en correspondance de leurs date et/ou heure de collection, dans des premiers moyens de mémorisation accessibles aux moyens de traitement ;
- ses moyens de traitement peuvent être chargés d'accéder à des seconds moyens de mémorisation du réseau dans lesquels sont stockées des données locales représentatives de la configuration au moins bidimensionnelle de zones, afin d'adjoindre aux données d'une cartographie des données locales représentatives de la configuration d'une zone choisie ;
- ses moyens de traitement peuvent être chargés de déterminer les positions géographiques des terminaux et/ou des équipements de réseau à partir d'informations d'abonnés et/ou d'informations de réseau accessibles au sein du réseau ;
- il peut comprendre des moyens de navigation chargés d'interagir avec les moyens de traitement pour permettre à un utilisateur d'obtenir un gros plan d'une partie choisie d'une cartographie affichée, et/ou l'adjonction ou la suppression d'au moins un équipement de réseau choisi et/ou d'au moins un terminal choisi d'une cartographie affichée, et/ou la restriction à un unique service choisi d'une qualité de service objet d'une cartographie affichée, et/ou l'adjonction ou la suppression d'une contrainte de sélection des données d'analyse participant à une cartographie affichée, et/ou une cartographie correspondant à une date choisie antérieure à celle de la cartographie affichée, et/ou une nouvelle cartographie représentative d'une comparaison entre une cartographie affichée et une cartographie correspondant à une date antérieure (ou postérieure) choisie ;
- ses moyens de traitement peuvent être chargés d'attribuer à certaines au moins des données d'analyse, objet d'une cartographie, des niveaux représentatifs de la qualité de service choisie, afin que chaque équipement de réseau et/ou terminal choisi puisse être affiché en fonction du niveau associé aux données d'analyse qui le concernent.

L'invention propose également un système d'optimisation et/ou de gestion et/ou de supervision de réseau équipé, d'une part, de moyens d'analyse chargés d'analyser des données d'analyse et des positions géographiques associées, délivrées sous une forme cartographique, et d'autre part, d'un dispositif de cartographie de qualité de service du type de celui présenté ci-avant et propre à alimenter ses moyens d'analyse en données d'analyse et positions géographiques associées.

L'invention est particulièrement bien adaptée aux réseaux de communication fixe comportant des lignes de transmission de données à haut débit, comme par exemple des lignes de type xDSL ou des câbles ou encore des fibres optiques, reliant des points d'accès (tels que des modems) de terminaux à des équipements de réseau de type concentrateur.

D'autres caractéristiques et avantages de l'invention apparaîtront à l'examen de la description détaillée ci-après, et des dessins annexés, sur lesquels :
- la figure 1 illustre de façon très schématique une partie d'un réseau de communication fixe comprenant un équipement de gestion de réseau couplé à un système d'optimisation et/ou de gestion et/ou de supervision de réseau équipé d'un exemple de réalisation d'un dispositif de cartographie de qualité de service selon l'invention,
- la figure 2 illustre de façon schématique un exemple de cartographie de la qualité de service offerte par un réseau de communication fixe dans une zone géographique de type ville, et
- la figure 3 illustre de façon schématique un gros plan d'une partie (ZZ) de la cartographie de la figure 2.

Les dessins annexés pourront non seulement servir à compléter l'invention, mais aussi contribuer à sa définition, le cas échéant.

L'invention a pour objet de permettre le contrôle de la qualité de service effectivement perçue par des terminaux de communication fixe connectés, via des points d'accès (comme par exemple des modems (modulateurs/démodulateurs)), à des réseaux de communication fixe.

Dans ce qui suit, on considère à titre d'exemple non limitatif que le réseau de communication fixe comporte des lignes de transmission de données à haut débit de type xDSL (ou x Digital Subscriber Line). Mais l'invention n'est pas limitée à cette application. Elle concerne en effet tous les réseaux de communication fixe auxquels sont connectés des terminaux de communication fixe via des points d'accès (tels que des modems), et notamment les réseaux câblés et les réseaux optiques (à fibres optiques).

Par ailleurs, on considère dans ce qui suit, à titre d'exemple non limitatif, que les terminaux de communication fixe (ci-après appelés « terminaux ») sont des ordinateurs fixes ou portables équipés d'un point d'accès à au moins un service, de type modem. Mais l'invention n'est pas limitée à cette application. Elle concerne en effet tous les terminaux de communication fixe pouvant être raccordés à un réseau fixe via un point d'accès à au moins un service, et notamment les serveurs, les récepteurs de télévision et les dispositifs de réception de programmes de télévision et/ou de vidéos codés ou non (comme par exemple les « set-top boxes », les « live boxes », les « free boxes » ou les enregistreurs vidéo numériques (ou PVR (pour « Personal Video Recorder »)).

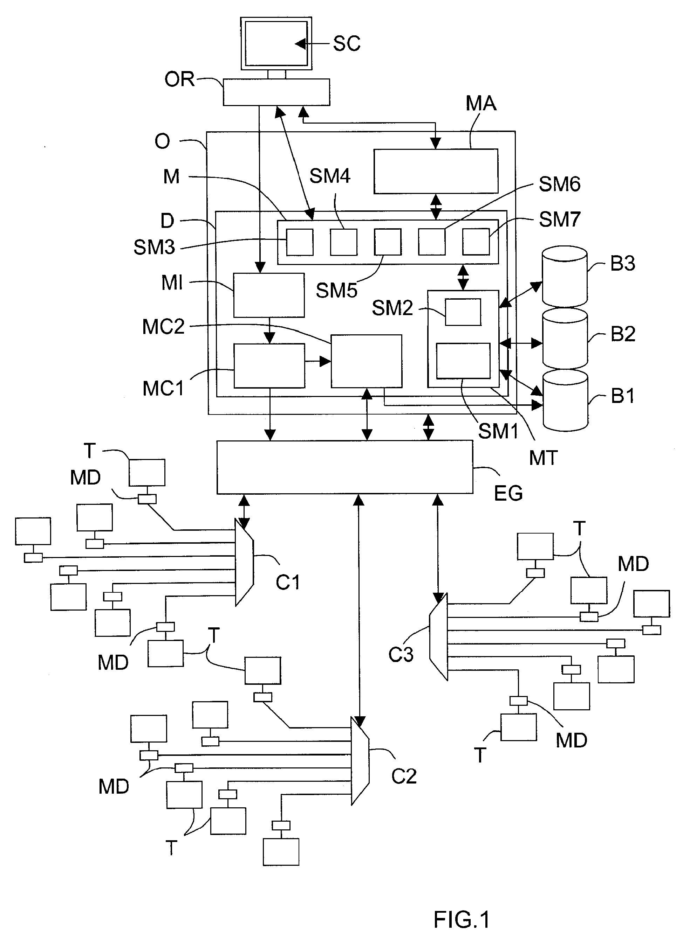

Comme illustré sur la figure 1, un réseau fixe large bande peut, d'une façon très schématique mais néanmoins suffisante à la compréhension de l'invention, être résumé à des lignes (téléphoniques) de transmission (ici à haut débit - xDSL) couplées, d'une part, à des terminaux T, éventuellement via des modems (points d'accès) MD, et d'autre part, à des équipements de réseau Ci, de type concentrateur Ci (ou DSLAM, pour « Digital Subscriber Line Access Multiplexer » - multiplexeur d'accès de lignes numériques d'abonnés »), connectés aux commutateurs de centraux téléphoniques, reliés entre eux par l'intermédiaire d'un coeur de réseau (non représenté).

Dans l'exemple non limitatif illustré sur la figure 1, le réseau comprend trois concentrateurs xDSL C1 à C3 (i = 1 à 3). Mais, l'indice i peut prendre n'importe quelle valeur supérieure ou égale à un (1).

Le réseau fixe comprend également un équipement de gestion de réseau EG (ou « xDSL Network Manager ») couplé aux équipements de réseau, et notamment aux concentrateurs Ci, et aux modems MD afin de pouvoir obtenir auprès d'eux des données d'analyse.

On entend ici par « données d'analyse », des données de trafic, ou des paramètres de réseau, ou encore des indicateurs, relatifs à la qualité de service (QoS) et/ou à l'état du trafic. Ces données d'analyse peuvent être mesurées ou estimées ou récupérées par le système de gestion de réseau EG. Leur récupération se fait généralement auprès des points d'accès MD, ou bien auprès des concentrateurs Ci notamment lorsqu'ils comportent une base de données destinée à stocker les données d'analyse provenant des points d'accès MD qui leurs sont connectés, voire même dans certains cas auprès des terminaux T.

En outre, on entend ici par « équipement (ou élément) de réseau » tout constituant (physique et/ou logique) d'un réseau fixe par lequel passent des trafics définis localement par des valeurs de paramètre(s) ou d'indicateur(s).

Afin de permettre le contrôle de la qualité de service au sein du réseau, l'invention propose de l'équiper d'un dispositif de cartographie de qualité de service D.

Comme cela est illustré sur la figure 1, ce dispositif D peut par exemple faire partie d'un système (ou outil) d'optimisation et/ou de gestion et/ou de supervision de réseau OG couplé à l'équipement de gestion EG. Mais cela n'est pas obligatoire. Il peut en effet être couplé à l'équipement de gestion EG et/ou à un système d'optimisation et/ou de gestion et/ou de supervision de réseau.

Il est ici rappelé que les systèmes d'optimisation et/ou de gestion et/ou de supervision de réseau OG permettent de suivre l'évolution de la qualité de service (ou QoS) au sein de certains équipements (ou éléments) de réseau, et comprennent généralement un module d'analyse MA chargé d'analyser des données d'analyse afin de diagnostiquer des causes de problèmes, notamment de qualité de service, et de proposer des solutions pour résoudre ces problèmes. Ce module d'analyse MA est cependant optionnel, dans le cadre de l'invention.

Le dispositif D selon l'invention comprend au moins un module de contrôle MC1 couplé à l'équipement de gestion EG, un module de collection MC2 couplé module de contrôle MC1 et à l'équipement de gestion EG, et un module de traitement MT.

Le module de contrôle MC1 est chargé d'adresser des instructions à l'équipement de gestion EG afin de lui ordonner de déterminer des données d'analyse représentatives d'au moins une qualité de service choisie et/ou d'un état de trafic, relatif(s) à au moins un terminal T (en fait son modem MD) et/ou un équipement de réseau Ci situé dans au moins une zone choisie du réseau.

On entend ici par « zone » aussi bien une zone géographique qu'une zone administrative. Par ailleurs, on entend ici par « zone géographique du réseau » toute zone dans laquelle se trouve situé au moins un terminal T ou un équipement de réseau raccordé à un réseau fixe objet d'un contrôle de qualité de service, quelle qu'en soit la taille. Il pourra s'agir d'une pièce d'un bâtiment, d'une partie d'un bâtiment, d'un ensemble de bâtiments, d'un quartier d'une ville ou d'une agglomération, d'une ville ou d'une agglomération, d'une partie d'une région, d'une ou plusieurs régions, voire même d'un ou plusieurs pays, par exemple. En outre, on entend ici par « zone administrative » toute zone définie à partir d'au moins un critère administratif, comme par exemple au moins un type ou une version de point d'accès ou au moins un type ou une version de concentrateur ou encore un ensemble de points d'accès (ou de concentrateurs) dont un paramètre est supérieur ou inférieur à une valeur donnée.

Les instructions peuvent être soit fournies sous la forme d'un fichier par un ordinateur OR contrôlé par l'opérateur du réseau, soit générées par une interface de type homme/machine MI à partir de commandes et/ou instructions fournies par l'opérateur du réseau via un ordinateur OR.

Comme cela est illustré sur l'unique figure, cette interface de type homme/machine Ml peut être implantée dans le dispositif D. Mais, cela n'est pas une obligation. Elle pourrait en effet être implantée dans le système d'optimisation et/ou de gestion et/ou de supervision OG.

Grâce à une telle interface homme/machine MI l'opérateur peut notamment définir chaque zone devant faire l'objet d'une détermination de données d'analyse, chaque qualité de service choisie, chaque service choisi, chaque date et/ou heure de détermination choisie(s) et chaque terminal T et/ou équipement de réseau concerné par les données d'analyse à collecter. Elle permet également de définir une programmation de l'équipement de gestion EG, afin qu'il détermine certaines au moins des données d'analyse à des instants choisis et dans des zones (géographiques ou administratives) choisies. Par exemple une programmation peut consister à déterminer les données d'analyse relatives aux services de transmission de vidéos sur tout ou partie du réseau fixe entre 18H00 et 23H00.

Chaque programmation est transformée par le module de contrôle MC1 en instructions qu'il transmet à l'équipement de gestion EG afin qu'il se configure de manière à déclencher les déterminations de données d'analyse correspondantes.

Le module de collection MC2 est chargé de collecter dans l'équipement de gestion EG les données d'analyse qu'il a déterminées à la demande du module de contrôle MC1. Cette collection se fait préférentiellement à la requête du module de contrôle MC1. Par conséquent, en cas de programmation des déterminations de données d'analyse, le module de collection MC2 peut être également programmé par le module de contrôle MC1 de manière à collecter les données d'analyse chaque fois qu'elles ont été déterminées par l'équipement de gestion EG.

Préférentiellement, le module de collection MC2 stocke les données d'analyse, qu'il a collectées, dans des premiers moyens de mémorisation B1, en correspondance de leur(s) date et/ou heure de détermination. Ces premiers moyens de mémorisation B1 peuvent se présenter sous n'importe quelle forme, comme par exemple une mémoire ou une base de données (comme c'est le cas ci-après).

Comme cela est illustré sur la figure 1, cette première base de données d'analyse collectées B1 est de préférence située à l'extérieur du dispositif D. Mais, cela n'est pas obligatoire. Elle peut en effet faire partie du dispositif D ou bien du système d'optimisation et/ou de gestion et/ou de supervision OG, étant donné qu'il peut les utiliser pour effectuer ses propres analyses au moyen de son module d'analyse MA.

Le module de traitement MT est tout d'abord chargé de déterminer les positions géographiques (au moins bidimensionnelles (2D)) des terminaux T et/ou des équipements de réseau Ci qui sont situés dans chaque zone choisie par l'opérateur et qui sont concernés par des données d'analyse collectées. Il est important de noter que ces zones ne sont pas forcément celles définies par les instructions destinées à l'équipement de gestion EG. Il s'agit en effet de zones pour lesquelles l'opérateur souhaite obtenir des cartographies de qualité de service à partir de données d'analyse nouvellement ou anciennement collectées.

Pour déterminer la position géographique (latitude, longitude et éventuellement altitude (dans le cas 3D)) d'un terminal T ou d'un équipement de réseau Ci, le module de traitement MT peut par exemple accéder à des seconds moyens de mémorisation B2 dans lesquels sont stockées des données représentatives d'information sur les abonnés et/ou d'informations de réseau.

Ces deuxièmes moyens de mémorisation B2 peuvent se présenter sous n'importe quelle forme, comme par exemple une mémoire ou une base de données (comme c'est le cas ci-après). Comme cela est illustré sur la figure 1, cette deuxième base de données d'information B2 est de préférence située à l'extérieur du dispositif D. Mais, cela n'est pas obligatoire.

Les informations qui sont stockées dans cette deuxième base de données d'information B2 définissent généralement le type d'abonnement souscrit par un abonné et au moins son adresse postale, ainsi qu'éventuellement la position géographique correspondante. Si les informations d'un abonné ne portent que sur son adresse postale, le module de traitement MT en déduit la position géographique correspondante (éventuellement en faisant appel à une application externe de « géo-nommage »). Les informations sur les équipements de réseau Ci peuvent être par exemple leur position géographique, leur type ou leur version logicielle.

En variante, les positions géographiques des terminaux T et/ou des concentrateurs Ci peuvent être éventuellement obtenues auprès desdits concentrateurs Ci.

Lorsque le module de traitement MT a déterminé la position géographique d'un terminal T ou d'un équipement Ci, il l'associe à chaque donnée d'analyse correspondante (plusieurs données d'analyse nouvellement collectées peuvent en effet concerner un équipement de réseau Ci (un même terminal T (indirectement)) ou un point d'accès MD voisin (via des formules spécifiques).

Puis, le module de traitement MT délivre sous une forme cartographique les données d'analyse associées aux positions géographiques des équipements de réseau et/ou des terminaux qui sont situés dans chaque zone choisie. Ces données cartographiques peuvent alors soit être affichées sur l'écran SC d'un ordinateur OR, soit transmises au module d'analyse MA du système d'optimisation et/ou de gestion et/ou de supervision OG afin qu'il les analyse.

Le module de traitement MT peut être agencé de manière à accéder à des troisièmes moyens de mémorisation B3 du réseau, dans lesquels sont stockées des données locales représentatives de la configuration au moins bidimensionnelle de zones. On entend ici par « configuration » des informations décrivant l'agencement d'un bâtiment ou d'un ensemble de bâtiments, d'un quartier d'une ville ou d'une agglomération (par exemple les positions respectives des bâtiments et des rues), ou d'une ville ou d'une agglomération (par exemple les positions respectives des quartiers et des principales rues ou axes de circulation).

Ces troisièmes moyens de mémorisation B3 peuvent se présenter sous n'importe quelle forme, comme par exemple une mémoire ou une base de données (comme c'est le cas ci-après). Comme cela est illustré sur la figure 1, cette troisième base de données d'information B3 est de préférence située à l'extérieur du dispositif D (il peut par exemple s'agir de la base appelée GIS (pour « Geographical Information System » - système d'informations géographiques). Mais, cela n'est pas obligatoire.

Le module de traitement MT peut adjoindre aux données d'une cartographie certaines de ces données locales afin de l'enrichir et/ou d'en faciliter l'interprétation.

Les données d'analyse se présentant généralement sous la forme de valeurs, le module de traitement MT peut être également chargé de transformer certaines au moins d'entre elles en niveaux représentatifs de la qualité de service choisie. Par exemple, on définit des intervalles de valeurs que l'on associe à des niveaux différents, par exemple de gris ou de couleurs. Ainsi, chaque terminal T ou équipement de réseau Ci peut être affiché en fonction du niveau qui est associé aux données d'analyse qui le concernent.

Comme cela est illustré sur la figure 1, le module de traitement MT peut par exemple comprendre deux sous-modules, l'un SM1 étant chargé d'extraire des différentes bases de données B1, B2 et B3 les informations et données nécessaires à la construction des cartes de qualité de service, l'autre SM2 étant chargé de filtrer les informations des cartes afin qu'elles satisfassent aux besoins et éventuelles contraintes de visualisation (ou d'export) imposées par l'opérateur. Par exemple, le second sous-module SM2 peut cacher ou montrer un ou plusieurs types d'équipements de réseau.

Grâce au module de traitement MT, l'opérateur peut obtenir sur requête tout type de cartographie de qualité de service, comme par exemple une qualité de service en fonction d'un service (vidéo, voix, et analogue) et/ou d'un type d'abonné, ce qui lui permet d'orienter et d'affiner soit ses propres analyses du réseau et des services offerts, soit les analyses effectuées par le module d'analyse MA du système d'optimisation et/ou de gestion et/ou de supervision OG.

Pour permettre à l'opérateur de fournir au module de traitement MT ses requêtes et/ou ses contraintes et de visualiser les cartographies résultantes sur un écran SC d'ordinateur OR, le dispositif D comprend de préférence un module de navigation MN.

Comme cela est illustré sur la figure 1, le module de navigation MN peut comporter un ou plusieurs sous-modules affectés à des tâches différentes.

Par exemple, un premier sous-module SM3 est dédié à la définition des requêtes complexes (zone (géographique ou administrative) de cartographie choisie, qualité de service choisie, type de service choisi, type d'abonné choisi, type de terminal et/ou d'équipement de réseau, date et/ou heure choisies, et analogue), et à leur transmission au module de traitement MT. Ce premier sous-module SM3 permet d'obtenir des données de cartographie répondant à des critères plus complexes que ceux utilisés par les autres modules. Il utilise à cet effet des modèles enrichis. Les requêtes sont par exemple générées au moyen d'un langage de type SQL qui permet des filtrages évolués. Par exemple, l'opérateur peut générer une requête demandant la visualisation de tous les points d'accès MD d'un type donné pour lesquels la qualité de service associée à un paramètre donné est supérieure à un seuil donné.

Un deuxième sous-module SM4 peut par exemple être dédié aux demandes d'obtention de gros plan (ou « zoom »). Cette fonction est particulièrement utile lorsqu'un problème de qualité de service a été visualisé par l'opérateur au sein d'une zone cartographiée, puisqu'elle permet d'augmenter le niveau de détail de la cartographie en « zoomant » sur la portion de zone où le problème a été localisé.

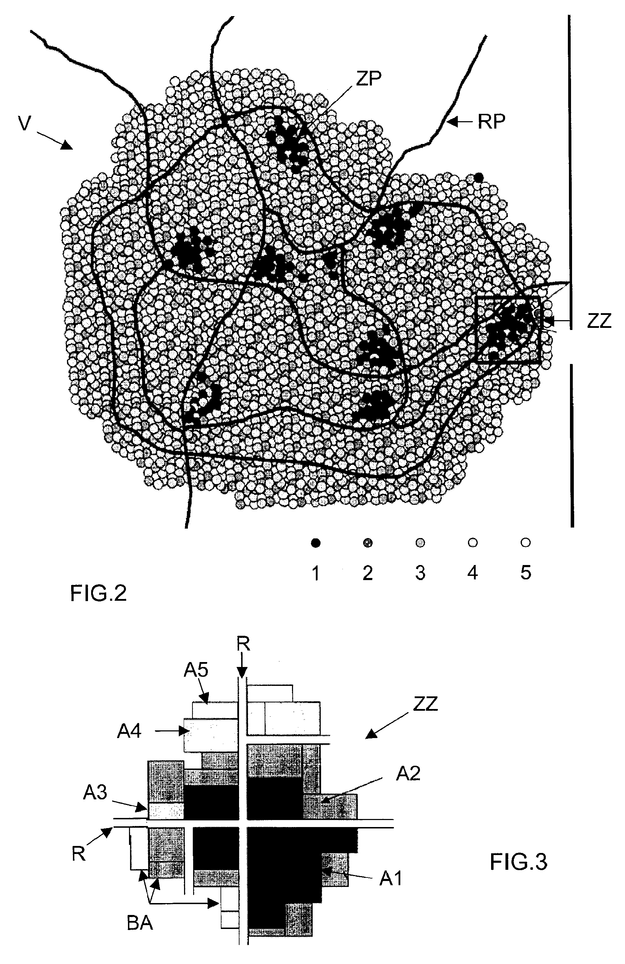

Une telle situation est illustrée schématiquement sur les figures 2 et 3 dans le cas d'une ville V. Ici, on a représenté sur la figure 2 une cartographie de qualité de service dans une ville V, en associant chaque terminal T, situé dans le périmètre de la ville V, à un cercle qui matérialise sa position géographique par rapport aux principaux axes routiers RP (définis dans la troisième base de données d'informations B3) et en attribuant cinq niveaux de gris différents (1 à 5 sur la légende) en fonction de la valeur de la qualité de service associée au terminal T.

Sur cet exemple de cartographie de qualité de service on peut observer huit zones ZP dans lesquelles le taux de terminaux T disposant d'une très mauvaise qualité de service (en noire - niveau 1) est élevé. En zoomant sur l'une d'entre elles, par exemple ZZ, au moyen du deuxième sous-module SM4, on obtient la cartographie illustrée sur la figure 3. Comme on peut le constater le niveau de détail est largement augmenté. On observe maintenant tous les principaux bâtiments BA et toutes les rues R. Chaque bâtiment BA est ici associé à un niveau de gris A1 à A5 du fait qu'il comprend plusieurs terminaux présentant une même valeur de qualité de service.

Cette opération de zoom est effectuée par le module de traitement MT à la requête du deuxième sous-module SM4 du module de navigation MN. Il nécessite la récupération de données d'information dans la troisième base de données B3 et un filtrage des données cartographiques qui concernent la portion de zone objet du zoom.

Un troisième sous-module SM5 peut par exemple être dédié à l'adjonction ou la suppression d'au moins un équipement de réseau (ou type d'équipement) choisi (par exemple les concentrateurs Ci) et/ou d'au moins un terminal T (ou type de terminal ou d'abonné) choisi dans une cartographie affichée.

Cette opération d'adjonction ou de suppression est effectuée par le module de traitement MT à la requête du troisième sous-module SM5 du module de navigation MN. Il nécessite un nouveau filtrage des données de la zone objet de la cartographie et/ou une éventuelle récupération de données d'information dans la deuxième B2 et/ou la troisième B3 base de données.

Un quatrième sous-module SM6 peut par exemple être dédié à la restriction d'une qualité de service, objet d'une cartographie affichée, à un unique service choisi, et/ou à l'adjonction ou la suppression d'une contrainte de sélection des données d'analyse participant à une cartographie affichée.

Cette opération de restriction et/ou d'adjonction ou de suppression est effectuée par le module de traitement MT à la requête du quatrième sous-module SM6 du module de navigation MN. Il nécessite un nouveau filtrage des données de la zone objet de la cartographie.

Un cinquième sous-module SM7 peut par exemple être dédié à l'affichage d'une cartographie correspondant à une date choisie antérieure à celle d'une cartographie affichée et/ou à une nouvelle cartographie représentative d'une comparaison entre une cartographie affichée et une cartographie correspondant à une date antérieure (ou postérieure) choisie.

Cette opération de renouvellement d'affichage et/ou de comparaison de cartographies est effectuée par le module de traitement MT à la requête du cinquième sous-module SM7 du module de navigation MN. Il nécessite une récupération de données d'information dans la première B1 et/ou la deuxième B2 et/ou la troisième B3 base de données et un nouveau filtrage des données de la zone objet de la cartographie. Par exemple, une comparaison de cartographies peut consister à effectuer la différence entre les valeurs de qualité de service des points constituant la zone objet de la cartographie, puis à constituer la cartographie des différences pour la zone considérée, en vue de son affichage sur l'écran SC.

Le dispositif de cartographie de qualité de service D selon l'invention, et notamment ses module de traitement MT, module de contrôle MC1 et module de collection MC2, et ses éventuels module d'interface MI et module de navigation MN, peuvent être réalisés sous la forme de circuits électroniques, de modules logiciels (ou informatiques), ou d'une combinaison de circuits et de logiciels.

L'invention offre plusieurs avantages, parmi lesquels :
- la génération de cartographies de qualité de service permettant à un opérateur d'avoir rapidement une vision globale des performances de son réseau, et de faire des analyses approfondies au moyen de requêtes graphiques,
- l'intégralité d'un réseau ou seulement une partie de celui-ci peut être automatiquement cartographiée et éventuellement mise à jour continuellement à coût réduit,
- elle fournit des données cartographiques qui peuvent être utilisées pour corréler graphiquement des problèmes de qualité de service à des causes de problèmes (dites « racine »),
- elle permet à l'opérateur de contrôler les déterminations des données d'analyse afin d'éviter une surcharge de son réseau (le nombre de zones objet d'une cartographie, tout comme le nombre de mesures effectuées, peut en effet être contrôlé).

L'invention ne se limite pas aux modes de réalisation de dispositif de cartographie de qualité de service et de système d'optimisation et/ou de gestion et/ou de supervision de réseau décrits ci-avant, seulement à titre d'exemple, mais elle englobe toutes les variantes que pourra envisager l'homme de l'art dans le cadre des revendications ci-après.

## Revendications

1. Dispositif de cartographie de qualité de service (D) pour un réseau de communication fixe comportant des lignes de communication reliant des équipements de réseau (Ci) à des terminaux de communication (T), via des points d'accès à au moins un service (MD), les équipements de réseau et terminaux ayant des positions géographiques déterminables et étant impliqués dans des trafics définis localement par des données d'analyse représentatives d'une qualité de service et/ou d'un état de trafic, **caractérisé en ce qu'**il comprend :
- des moyens de contrôle (MC1) agencés pour ordonner à un équipement de gestion de réseau (EG), couplé auxdits équipements de réseau (Ci), de déterminer des données d'analyse représentatives d'au moins une qualité de service choisie et/ou un état de trafic relatifs à au moins un terminal (T) et/ou un équipement de réseau (Ci) situé dans au moins une zone choisie du réseau,
- des moyens de collection (MC2) agencés pour collecter dans ledit équipement de gestion de réseau (EG) lesdites données d'analyse déterminées à la demande desdits moyens de contrôle (MC1), et
- des moyens de traitement (MT) agencés pour déterminer la position géographique de terminaux (T) et/ou équipements de réseau (Ci) situés dans une zone choisie et concernés par des données d'analyse collectées, puis pour associer chaque position déterminée à la donnée d'analyse correspondante, et pour délivrer sous une forme cartographique les données d'analyse associées aux positions géographiques de certains au moins des équipements de réseau (Ci) et/ou terminaux (T) situés dans chaque zone choisie, en vue de leur exploitation.

2. Dispositif selon la revendication 1, **caractérisé en ce que** lesdits moyens de contrôle (MC1) sont agencés pour programmer, d'une part, ledit équipement de gestion de réseau (EG) de sorte qu'il détermine certaines au moins desdites données d'analyse à des instants choisis et dans des zones choisies, et d'autre part, lesdits moyens de collection (MC2) de sorte qu'ils collectent lesdites données d'analyse chaque fois qu'elles ont été déterminées par ledit équipement de gestion de réseau (EG).

3. Dispositif selon l'une des revendications 1 et 2, **caractérisé en ce qu'**il comprend des moyens d'interface homme/machine (MI) agencés pour permettre à un utilisateur de définir au moins chaque zone choisie de collection de données d'analyse, chaque zone choisie à cartographier, chaque qualité de service choisie, chaque date et/ou heure de détermination de données d'analyse, et chaque terminal (T) et/ou équipement de réseau (Ci) objet de la cartographie.

4. Dispositif selon l'une des revendications 1 à 3, **caractérisé en ce que** lesdits moyens de collection (MC2) sont agencés pour stocker lesdites données d'analyse collectées, en correspondance de leurs date et/ou heure de collection, dans des premiers moyens de mémorisation (B1) accessibles auxdits moyens de traitement (MT).

5. Dispositif selon l'une des revendications 1 à 4, **caractérisé en ce que** lesdits moyens de traitement (MT) sont agencés pour accéder à des seconds moyens de mémorisation (B3) du réseau dans lesquels sont stockées des données locales représentatives de la configuration au moins bidimensionnelle de zones, de manière à adjoindre aux données d'une cartographie des données locales représentatives de la configuration d'une zone choisie.

6. Dispositif selon l'une des revendications 1 à 5, **caractérisé en ce que** lesdits moyens de traitement (MT) sont agencés pour déterminer lesdites positions géographiques des terminaux (T) et/ou équipements de réseau (Ci) à partir d'informations d'abonnés et/ou d'informations de réseau accessibles au sein dudit réseau.

7. Dispositif selon l'une des revendications 1 à 6, **caractérisé en ce qu'**il comprend des moyens de navigation (MN) agencés pour interagir avec lesdits moyens de traitement (MT) pour permettre à un utilisateur d'obtenir un gros plan d'une partie choisie d'une cartographie affichée, et/ou d'adjoindre ou supprimer au moins un équipement de réseau (Ci) choisi et/ou au moins un terminal (T) choisi d'une cartographie affichée, et/ou de restreindre à un unique service choisi une qualité de service objet d'une cartographie affichée, et/ou d'adjoindre ou de supprimer une contrainte de sélection des données d'analyse participant à une cartographie affichée, et/ou d'obtenir une cartographie correspondant à une date choisie antérieure à celle de la cartographie affichée et/ou une nouvelle cartographie représentative d'une comparaison entre la cartographie affichée et une cartographie correspondant à une date antérieure choisie.

8. Dispositif selon l'une des revendications 1 à 7, **caractérisé en ce que** lesdits moyens de traitement (MT) sont agencés pour attribuer à certaines au moins des données d'analyse, objet d'une cartographie, des niveaux représentatifs de la qualité de service choisie de sorte que chaque équipement de réseau (Ci) et/ou terminal (T) choisi puisse être affiché en fonction du niveau associé aux données d'analyse qui le concernent.

9. Système d'optimisation et/ou de gestion et/ou de supervision de réseau (OG), **caractérisé en ce qu'**il comprend i) des moyens d'analyse (MA) agencés pour analyser des données d'analyse et des positions géographiques associées, délivrées sous une forme cartographique, et ii) un dispositif de cartographie de qualité de service (D) selon l'une des revendications précédentes propre à alimenter lesdits moyens d'analyse (MA) en données d'analyse et positions géographiques associées.

10. Utilisation des dispositif de cartographie de qualité de service (D) et système d'optimisation et/ou de gestion et/ou de supervision de réseau (OG) selon l'une des revendications précédentes dans des réseaux comportant des lignes de transmission de données à haut débit.

11. Utilisation selon la revendication 10, **caractérisé en ce que** lesdites lignes sont choisies dans un groupe comprenant les lignes de type xDSL, les câbles et les fibres optiques, reliant des équipements de réseau (Ci) de type concentrateur à des points d'accès à au moins un service (MD), connectés à des terminaux de communication fixe (T).
